# EUROPÄISCHE PATENTSCHRIFT

(11) **EP 0 879 164 B1**
(45) Veröffentlichungstag und Bekanntmachung des Hinweises auf die Patenterteilung: **27.03.2002**
(21) Anmeldenummer: 96946036.9
(22) Anmeldetag: 04.12.1996
(51) Int. Cl.: B60T 8/52, F16D 66/00, G01L 1/12

(54) **BREMSVORRICHTUNG FÜR FAHRZEUGE**
BRAKING DEVICE FOR VEHICLES
DISPOSITIF DE FREINAGE POUR VEHICULES

(30) Priorität: 17.02.1996 DE 19605987
(43) Veröffentlichungstag der Anmeldung: 25.11.1998
(73) Patentinhaber: ROBERT BOSCH GMBH, 70442 Stuttgart (DE)
(72) Erfinder: SEILS, Wolfgang, D-71640 Ludwigsburg (DE)
(86) Internationale Anmeldenummer: DE9602317
(87) Internationale Veröffentlichungsnummer: WO9729937

(56) Entgegenhaltungen:
- DE-A- 1 961 280
- DE-A- 3 600 647
- DE-A- 4 024 811
- RESEARCH DISCLOSURE, Nr. 270, Oktober 1986, NEW YORK, NY, USA, XP002032887 "Anti-Skid Braking with Brake-Mount Stress Sensing"
- ASEA JOURNAL, Bd. 45, Nr. 5, 1972, VASTERAAS SE, Seiten 129-134, XP002032888 EGON JOHANSSON: "New generation of PRESSDUCTOR force transducers."

## Beschreibung

### Stand der Technik

Die Erfindung geht aus von einer Bremsvorrichtung für Fahrzeuge der im Oberbegriff des Anspruchs 1 definierten Gattung.

In Bremsvorrichtungen für Fahrzeuge ist die Erfassung der Radbremsmomente an den einzelnen Fahrzeugrädern mittels sog. Bremsmoment-Sensoren notwendig, um bei der radindividuellen Bremsung Abweichungen zwischen den Rädern durch eine Bremsmomentregelung auszugleichen, sowie bei der Antriebsschlupfregelung (ASR) radindividuelle Bremswirkungen exakt einstellen zu können oder bei der Blockierschutzregelung (ABS) ein Blockieren des Fahrzeugrades anhand der Reibkoeffizienten-Schlupf-Kurve erkennen zu können.

Bei einer bekannten Bremsvorrichtung der eingangs genannten Art in einer schlupfgeregelten Bremsanlage (DE 36 00 647 A1) ist der über Dehnungsmeßstreifen verfügende Bremsmoment-Sensor in dem Kraftfluß der Kraftübertragung von der Welle zum Fahrzeugrad eingefügt, wobei der Sensor als Scheibe ausgebildet ist, die einerseits mit einem Radflansch und andererseits mit der Radfelge verschraubt ist. Über einen induktiven Übertrager wird das gemessene Bremsmoment bzw. ein dem Bremsmoment entsprechendes elektrisches Signal ausgegeben. Alternativ ist bei der bekannten Bremsvorrichtung vorgeschlagen, den Bremsmoment-Sensor auch am Bremsträger an einer Stelle einzubauen, die proportional zu dem Bremsmoment deformiert wird.

### Vorteile der Erfindung

Die erfindungsgemäße Bremsvorrichtung für Fahrzeuge mit den kennzeichnenden Merkmalen des Anspruchs 1 hat den Vorteil, daß der Bremsmoment-Sensor ohne Änderung für verschiedene Ausführungen von Radbremsen geeignet ist und beispielsweise sowohl bei Scheibenbremsen als auch bei Trommelbremsen zur Bremsmomentsensierung eingesetzt werden kann. Er ist kleinbauend, erfordert zum Einbau nur geringfügige Änderungen am Fahrwerk bzw. den Bremsteilen und kann bei Defekt problemlos ausgewechselt werden. Da er keinen direkten Zugang zu heißen Bremsteilen hat, arbeitet er zuverlässig und besitzt eine lange Lebensdauer.

Der erfindungsgemäß als Bremsmoment-Sensor eingesetzte Kraftaufnehmer, dessen Wirkungsweise auf den magnetoelektrischen Effekt oder Pressduktor-Prinzip beruht, nach welchem sich die magnetischen Eigenschaften von bestimmten Stahl- und anderen Metallegierungen mit der Einwirkung mechanischer Kräfte ändern, ist als sog. PillowBlock-Kraftaufnehmer bekannt, der beispielsweise zur Regelung von Zugspannungen in Walzstraßen eingesetzt wird. Da die beiden Wicklungen im rechten Winkel zueinander liegen, erfolgt zwischen ihnen keine magnetische Kopplung, solange der Metallblock nicht belastet ist. Wird der Metallblock belastet, d.h. wird eine Kraft angelegt, so verändert sich das Magnetfeld in der Weise, daß seine Permeabilität in Richtung der Kraft abnimmt. Dies führt zu einer veränderten Symmetrie des magnetischen Flusses, was wiederum bewirkt, daß ein Teil des Kraftflusses in der Sekundärwicklung eine Spannung induziert, die bis zu einer bestimmten Belastung proportional zur Last ist. Für die erfindungsgemäße Bremsmomentsensierung wird die Scherbeanspruchung des als Befestigungselement zwischen Bremsträger und Fahrwerk fungierenden Kraftaufnehmers erfaßt. Da das komplette Volumen des Metallblocks den Meßeffekt erzeugt, ergibt sich bei schräger oder ungleichmäßiger Krafteinleitung im Gegensatz zu Dehnungsmeßstreifen vorteilhaft eine Mittelwertbildung.

Durch die in den weiteren Ansprüchen aufgeführten Maßnahmen sind vorteilhafte Weiterbildungen und Verbesserungen der im Anspruch 1 angegebenen Bremsvorrichtung möglich.

Gemäß einer vorteilhaften Ausführungsform der Erfindung weist der Metallblock auf den voneinander abgekehrten, parallel zur Primärwicklung verlaufenden Seitenflächen je einen davon abstehenden Gewindezapfen mit einem Innen- oder Außengewinde auf. Dies führt zu einem extrem kleinbauenden Kraftaufnehmer, der allerdings kalibriert werden muß, da durch dessen Festschrauben über die Gewindezapfen Spannungen im Metallblock entstehen, die einen Fehler im Sensorsignal hervorrufen.

Gemäß einer bevorzugten Ausführungsform der Erfindung ist der Metallblock im Längsschnitt Doppel-T-förmig ausgebildet, und weist einen Mittelsteg und zwei zueinander parallele Querstege auf. In dem bevorzugt im Querschnitt viereckigen Mittelsteg sind die beiden sich kreuzenden Wicklungen angeordnet und in jedem bevorzugt plattenförmigen Quersteg sind entfernt vom Mittelsteg die Gewindebohrungen mit zum Mittelsteg parallelen Bohrungsachsen zum Aufnehmen von fahrwerk- und bremsträgerseitig festgelegten Gewindeschrauben eingebracht. Bei dieser konstruktiven Gestaltung des Sensors kann durch die Schraubbefestigung keine Beeinflussung der Sensorregion im Mittelsteg eintreten, da die Schraubbefestigung entfernt von den gekreuzten Wicklungen vorgenommen ist, und die an dem Kraftaufnehmer auftretende Scherkraft durch die beiden Querstege parallel geführt wird.

Gemäß einer weiteren Ausführungsform der Erfindung ist der Metallblock im Längsschnitt Doppel-π-förmig ausgebildet und weist zwei beabstandete, parallele Mittelstege und zwei zueinander parallele Querstege auf. In jedem Mittelsteg mit bevorzugt viereckigem Querschnitt ist ein Wicklungspaar der sich kreuzendenden beiden Wicklungen angeordnet und in jedem bevorzugt plattenförmigen Quersteg sind Gewindebohrungen mit zu den Mittelstegen parallele Bohrungsachsen zum Aufnehmen von fahrwerk- oder bremsträgerseitig festgelegten Gewindeschrauben eingebracht. Bei diesem Sensor werden durch die beiden Mittelstege zwei Kraftaufnehmer gebildet, auf die sich die in den Sensor eingeleiteten Scherkräfte aufteilen und die redundante Meßergebnisse liefern. Dieser Sensor kann damit bei höheren Sicherheitsanforderungen und für höhere Kräfte eingesetzt werden.

Gemäß einer vorteilhaften Ausführungsform der Erfindung sind die Gewindebohrungen in längs den mittelstegfernen Querkanten der plattenförmigen Querstege sich erstreckenden leistenartigen Vorsprüngen aufgenommen, die auf einander zugekehrten Seiten von den Querstegen abstehen und sich mit Vorsprünge, die sich mit nur geringem Spaltabstand einander gegenüberliegen, wird eine Kippung der Querstege begrenzt.

Gemäß einer weiteren Ausführungsform der Erfindung sind die beiden plattenförmigen Querstege an ihren mittelstegfernen Querkanten durch äußere Streben miteinander verbunden, die sich jeweils über die Vorsprünge und deren Spaltabstand hinweg erstrecken und mit den Querstegen und Vorsprüngen einstückig sind. Durch diese beiden äußeren Streben teilen sich die an dem Sensor angreifenden Scherkräfte auf den Mittelsteg und die beiden äußeren Streben auf, so daß mit dem Sensor höhere Kräfte übertragen werden können.

Gemäß einer vorteilhaften Ausführungsform der Erfindung ist der Metallblock auf seiner Ober- und Unterseite von jeweils einer Ringscheibe mit einer etwa der Metallblockbreite entsprechenden Ringbreite abgedeckt. Beide Ringscheiben sind durch um Umfangswinkel zueinander versetzte Radialstege untereinander verbunden. Die Ringscheiben enthalten Gewindebohrungen zum Aufnehmen von fahrwerk- und bremsträgerseitig festgelegten Gewindeschrauben. Diese kontruktive Ausführung des Sensors ist besonders für Trommelbremsen geeignet und erlaubt eine sehr große Kraftübertragung. Für redundante Meßergebnisse ist es möglich, einen weiteren Metallblock mit den sich kreuzenden Wicklungen zwischen den beiden Ringscheiben diametral zum ersten Metallblock anzuordnen.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:
- Fig. 1 bis 6: jeweils ausschnittweise eine Seitenansicht einer Bremsvorrichtung für Fahrzeuge mit einer als Scheibenbremse ausgebildeten Radbremse und verschiedenen Ausführungsformen von Bremsmonent-Sensoren,
- Fig. 7: eine Draufsicht einer Bremsvorrichtung für Fahrzeuge mit einer als Trommelbremse ausgebildeten Radbremse,
- Fig. 8: eine Seitenansicht der Bremsvorrichtung in Fig. 7,
- Fig. 9: eine Draufsicht einer Bremsvorrichtung für Fahrzeuge mit einer als Trommelbremse ausgebildeten Radbremse gemäß einem weiteren Ausführungsbeispiel,
- Fig.10: eine Seitenansicht der Bremsvorrichtung in Fig. 9.

### Beschreibung der Ausführungsbeispiele

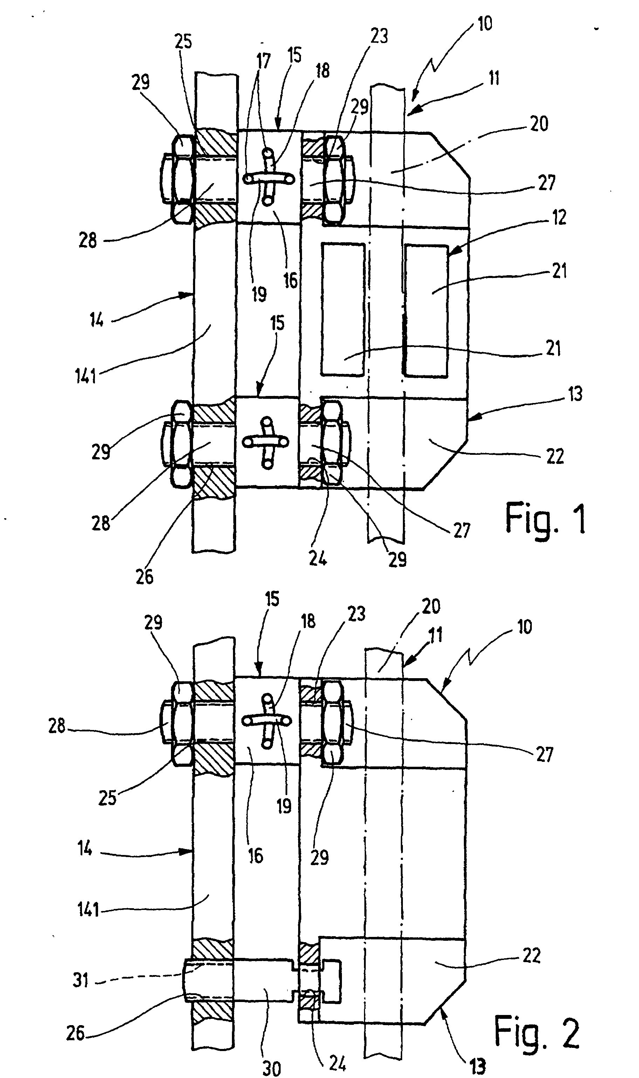

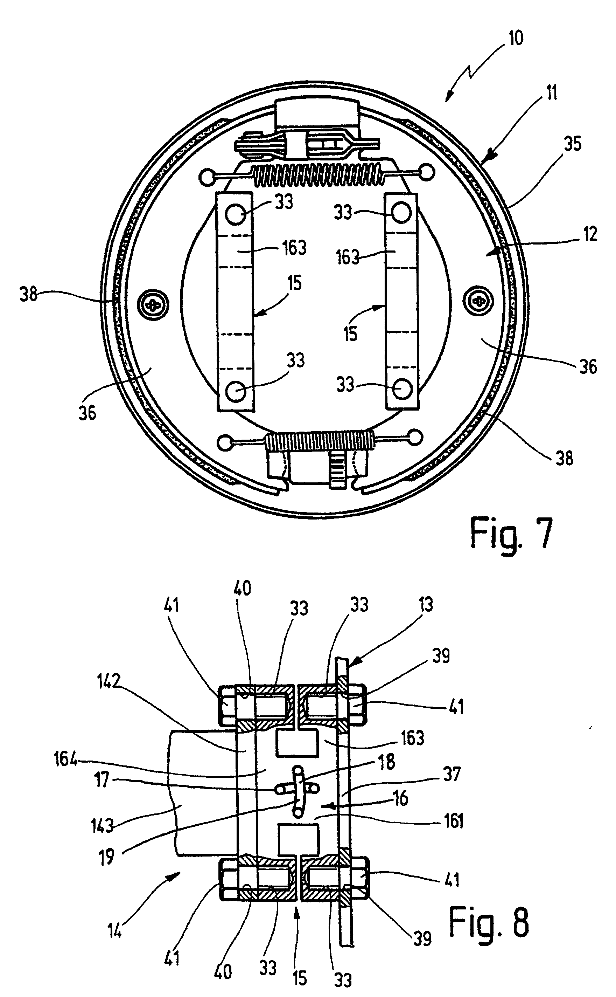

Den in Fig. 1 - 10 ausschnittweise dargestellten Bremsvorrichtungen für Fahrzeuge ist gemeinsam, das an jedem Fahrzeugrad eine Radbremse 10 vorgesehen ist, die einen mit dem hier nicht dargestellten Fahrzeugrad drehfest verbundenen Bremskörper 11, einen zur Bremsung am Bremskörper 11 angreifenden Bremsaktuator 12 sowie einen den Bremsaktuator aufnehmenden Bremsträger 13 aufweist. Der Bremsträger 13 ist am Fahrwerk 14 befestigt, von dem in Fig. 1 - 6 ein Achsschenkel 141 und in Fig. 7 - 10 eine an der Radachse 143 befestigter Befestigungsflansch 142 dargestellt ist. Zwischen dem Bremsträger 13 und dem Fahrwerk 14 ist mindestens ein Bremsmoment-Sensor 15 angeordnet, der als PillowBlock-Kraftaufnehmer ausgebildet ist, dessen Wirkungsweise auf dem bekannten Pressduktor-Prinzip, d.h. dem magnetoelastischen Effekt beruht, wobei die magnetischen Eigenschaften von bestimmten Stahl- und anderen Metallegierungen durch äußere mechanische Kräfte beeinflußt werden. Der Kraftaufnehmer, im folgenden kurz Sensor 15 genannt, weist daher einen lamellierten Metallblock 16 mit vier parallel zueinander verlaufende, an den Eckpunkten eines gedachten Quadrats angeordneten, den Metallblock 16 parallel zu dessen Seitenflächen durchdringenden Durchgangslöchern 17 und zwei im rechten Winkel zueinander durch die Durchgangslöcher 17 hindurchgeführte Wicklungen 18,19 auf. Bei einem lamellierten Metallblock 16 verlaufen die Durchgangslöcher 17 quer zu den Lamellen. Die Primärwicklung 18 ist wechselstromgespeist, und an der Sekundärwicklung 19 ist eine dem Kraftfluß im Metallblock 16 proportionale Meßspannung abnehmbar. Der Kraftaufnehmer bzw. Sensor 15 bildet dabei mindestens ein Befestigungselement zwischen Bremsträger 13 und Fahrwerk 14, indem der Metallblock 16 auf voneinander abgekehrten Seitenflächen, die parallel zur Primärwicklung 18 verlaufen, jeweils am Fahrwerk 14 und am Bremsträger 13 festgespannt ist. Für den Metallblock können folgende Stahl- bzw. Metallegierungen verwendet werden:
- 18 CrNi 8, 14 CrNi 18 (hartbare Chrom-Nickel-Stähle)
- 50 Fe, 50 Co (Vacuflux)
- 97 Fe, 3 Si
- 50 Fe, 50 Ni (auch als Sintermetall)
- Seltenerdlegierungen bestehend aus Fe mit Tb- und Dy-Anteilen
- MnZn-, NiZn-Ferrite

Die endgültige Entscheidung für ein bestimmtes Material ist abhängig vom zu messenden Kraftbereich, den Sensorabmessungen sowie der Spulendimensionierung.

Bei der in Fig. 1 - 6 als Scheibenbremse ausgeführten Radbremse wird der Bremskörper 11 von einer strichpunktiert angedeuteten Bremsscheibe 20 gebildet, die drehfest mit dem Fahrzeugrad verbunden ist. Der Bremsaktuator 12 weist zwei nur schematisch angedeutete Bremskolben 21 auf, die bei Bremsung sich links und rechts an die Bremsscheibe 20 anpressen. Der Bremsträger 13 ist als sog. Bremssattel 22 ausgebildet, der die Bremskolben 21 aufnimmt und zwei Augen 23,24 zur Befestigung an gleichartigen Augen 25,26 am Fahrwerk 14, hier am Achsschenkel 141, aufweist.

Im Ausführungsbeispiel der Bremsvorrichtung in Fig. 1 ist der Bremssattel 22 durch zwei Sensoren 15 mit dem Achsschenkel 141 verbunden. Jeder Sensor 15 weist hierzu zwei Gewindezapfen 27,28 mit Außengewinde auf, die auf den parallel zur Primärwicklung 18 verlaufenden, voneinander abgekehrten Seitenflächen rechtwinklig vorstehen. Die Gewindezapfen 27 der beiden Sensoren 15 sind durch die Augen 23,24 am Bremssattel 22 hindurchgesteckt, während der Gewindezapfen 28 der beiden Sensoren 15 durch die Augen 25,26 im Achsschenkel 141 hindurchgesteckt sind. Auf die Gewindezapfen 27,28 werden Muttern 29 aufgedreht, so daß die beiden Stahlblöcke 16 der Sensoren 15 einerseits an den Bremssattel 22 und andererseits an den Achsschenkel 141 angepreßt werden. Bei Bremsung wird der Bremssattel 22 von der Bremsscheibe 20 mitgezogen, wobei die Kraft, mit welcher der Bremssattel 22 von der Bremsscheibe 21 mitgezogen wird, proportional zum Bremsmoment ist. Diese Kraft wirkt bei Vorwärts- und Rückswärtfahren als Scherkraft auf die beiden Sensoren 15, und an den Sekundärwicklungen 19 wird jeweils eine dieser Kraft proportionale Ausgangsspannung abgenommen. Anstelle eines Außengewindes können die beiden Gewindezapfen 27,28 des Sensors 15 auch jeweils eine axiale Innengewindebohrung tragen, in die dann eine durch das zugeordnete Auge hindurchgesteckte Kopfschraube eingedreht wird.

Bei der beschriebenen Befestigung des Bremssattels 22 am Fahrwerk 14 durch zwei Sensoren 15 wird eine Redundanz in der Bremsmomentmessung erreicht, die aus Sicherheitsgründen angestrebt wird. Alternativ kann aber auch einer der beiden Sensoren 15 durch entsprechende Auslegung der Wicklungen des Stahlmaterials und der Abmessungen ausschließlich zur genaueren Messung des am meisten benutzten unteren Teilbremsbereichs verwendet werden. Der andere Sensor 15 übernimmt dann nur die Messung bei stärkeren Bremsungen.

Bei der in Fig. 2 dargestellten Bremsvorrichtung ist zwischen Bremssattel 22 und Fahrwerk 14 nur ein einziger Sensor 15 vorgesehen, der wie in Fig. 1 ausgebildet und in den Augen 23 und 25 von Bremssattel 22 bzw. Achsschenkel 141 befestigt ist. In das mit einem Innengewinde 31 versehene andere Auge 26 im Achsschenkel 114 ist ein Stehbolzen 30 eingeschraubt, der mit Spiel durch das andere Auge 24 im Bremssattel 22 hindurchragt. Das Auge 24 wird dabei bevorzugt als Langloch ausgebildet. Bei dieser Ausführung der Bremsvorrichtung wird das gesamte Bremsmoment von dem einen Sensor 15 aufgenommen. Der Stehbolzen 30 verhindert lediglich ein Kippen des Bremssattels 22. Selbstverständlich ist es möglich, die Langlochführung des Stehbolzens 30 im Achsschenkel 141 vorzusehen und den Stehbolzen 29 in das Auge 24 im Bremssattel 22 einzuschrauben, das hierzu mit einem entsprechenden Innengewinde 31 versehen wird.

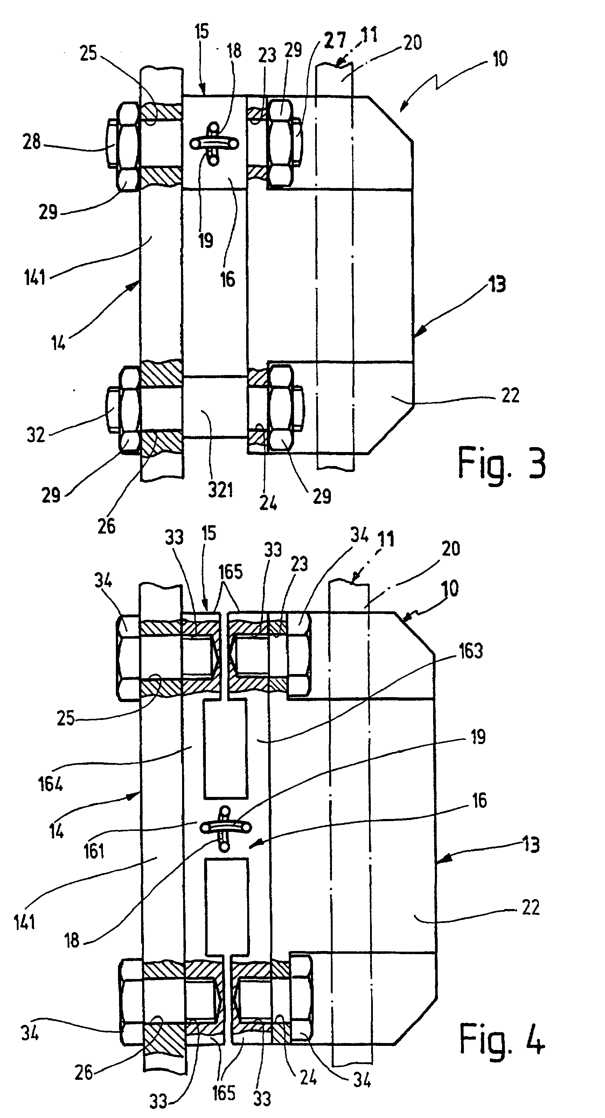

Bei dem Ausführungsbeispiel der Bremsvorrichtung in Fig. 3 ist wiederum nur ein Sensor 15 vorgesehen, der mit seinen Gewindezapfen 27,28 mittels der Muttern 29 in den Augen 23 und 25 am Bremssattel 22 bzw. am Achsschenkel 141 festgespannt ist. Die beiden anderen miteinander fluchtenden Augen 24,26 an Bremssattel 22 und Achsschenkel 141 sind durch einen Befestigungsbolzen 32 miteinander verbunden. Der Befestigungsbolzen 32 weist ein Distanzstück 321 auf, dessen axiale Länge der Breite des Metallblocks 16 entspricht. Durch Aufschrauben der Muttern 33 werden Bremssattel 22 und Achsschenkel 141 gegen das Distanzstück 321 verspannt. Bei dieser Bremsvorrichtung findet eine Kraftaufteilung der beim Bremsen auftretenden Scherkraft statt. Eine solche Bremskraftaufteilung kann bei besonders großen Bremsmomenten, z.B. an Lastkraftwagen, notwendig werden. Der Befestigungsbolzen 32 ist als Teil des Sensors 15 anzusehen und muß entsprechend eng toleriert sein.

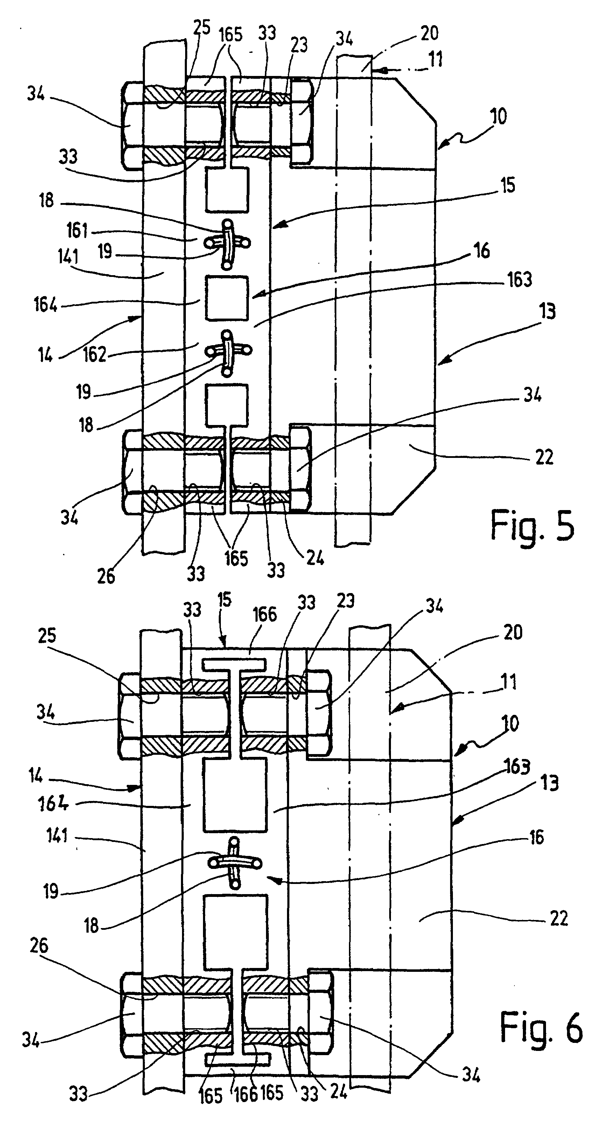

Der in Fig. 1 - 3 dargestellte Sensor 15 hat zwar ein extrem kleines Bauvolumen, jedoch ist zu beachten, daß die Schraubbefestigung das Sensorsignal beeinflußt; denn beim Festschrauben entstehen Spannungen im Metallblock 16, so daß hier eine Kalibrierung notwendig ist. Die in Fig. 4 - 6 dargestellten Sensoren 15 hingegen vermeiden eine Beeinflussung der Sensorregion durch die Schraubbefestigung am Bremssattel 22 und Achsschenkel 141.

Bei dem in Fig. 4 dargestellten Sensor 15 ist der Metallblock 16 im Längsschnitt Doppel-T-förmig ausgebildet und weist einen Mittelsteg 161 und zwei zueinander parallele Querstege 163 und 164 auf. Der Mittelsteg 161 wird von einem viereckigen Prisma und die Querstege 163,164 von damit einstückig verbundenen viereckigen Platten gebildet. Die Primärwicklung 18 und die Sekundärwicklung 19 sind in dem Mittelsteg 161 angeordnet und in jedem Quersteg 163,164 sind entfernt vom Mittelsteg 161 Gewindebohrungen 33 mit zum Mittelsteg 161 paralleler Bohrungsachse eingebracht. Die Gewindebohrungen 33 sind dabei in leistenartigen Vorsprüngen 165 aufgenommen, die sich längs der mittelstegfernen Querkanten der plattenförmigen Querstege 163,164 erstrecken und auf einander zugekehrten Seiten von den Querstegen 163,164 abstehen und sich mit Spaltabstand gegenüberliegen. In die Gewindebohrungen 33 des Sensors 15 sind Kopf schrauben 34 eingeschraubt, die durch die Augen 23 und 24 am Bremssattel 22 und durch die Augen 25 und 26 am Achsschenkel 141 hindurchgesteckt sind. Damit sind die beiden plattenförmige Querstege 163,164 am Bremssattel 13 und am Fahrwerk 14 festgespannt, die Scherkraft wird durch die Querstege 163,164 parallel geführt und eine Kippung ist durch die beiden Spalte zwischen den Vorsprüngen 34 begrenzt. Beim Bremsen wird das gesamte Bremsmoment von dem Sensor 15 aufgenommen, so daß die Bremsvorrichtung gemäß Fig. 4 in der Wirkung mit der Bremsvorrichtung gemäß Fig. 2 vergleichbar ist, allerdings mit dem Vorteil, daß keine Beeinflussung des Sensorsignals durch die Schraubbefestigung erfolgt.

Bei dem in Fig. 5 dargestellten Ausführungsbeispiel der Bremsvorrichtung ist der Metallblock 16 im Längsschnitt Doppel-π-förmig ausgebildet und weist zwei beabstandete, parallele Mittelstege 161,162 und zwei zueinander parallele Querstege 163 und 164 auf. Die Mittelstege 161,162 sind wiederum als viereckige Prismen und die Querstege 163,164 als mit den Prismen einstückige Platten ausgebildet, die längs ihrer Querkanten wiederum die Vorsprünge 165 tragen, die sich mit Spaltabstand gegenüberliegen. Am äußeren Ende im Bereich der Vorsprünge 165 sind wiederum vier Gewindebohrungen 33 in die beiden plattenförmigen Querstege 163,164 eingebracht. Bis auf die beiden Mittelstege 161 und 162 entspricht daher der Sensor 15 gemäß Fig. 5 im Aufbau dem Sensor 15 in Fig. 4. In jedem Mittelsteg 161,162 ist ein Wicklungspaar der sich kreuzenden beiden Wicklungen 18,19 angeordnet, wobei wiederum die Primärwicklung 18 parallel zu den Querstegen 163,164 ausgerichtet ist. Durch die beiden Mittelstege 161,162 mit jeweils zwei Wicklungen 18,19 werden sozusagen zwei Kraftaufnehmer zur Messung der beim Bremsen entstehenden Scherkräfte realisiert. Die Bremsvorrichtung in Fig. 5 entspricht daher in ihrer Wirkungsweise der in Fig. 1 dargestellten Bremsvorrichtung, lediglich mit dem Unterschied, daß durch die Schraubbefestigung keine Beeinflussung der Sensorsignale auftritt.

Der bei der Bremsvorrichtung gemäß Fig. 6 den Bremssattel 13 am Achsschenkel 141 des Fahrwerks 14 befestigende Sensor 15 entspricht im Aufbau dem Sensor 15 in der Bremsvorrichtung gemäß Fig. 4 mit dem Unterschied, daß die beiden plattenförmigen Querstege 163,164 längs ihrer Querkanten zusätzlich durch äußere Streben 166 miteinander verbunden sind. Die Streben 166 erstrecken sich jeweils über die Vorsprünge 165 und deren Spaltabstand hinweg und sind mit den Querstegen 163,164 und den Vorsprüngen 165 einstückig. Bei diesem Sensor 15 teilt sich die Scherkraft auf den Kraftaufnehmer, also auf den Mittelsteg 161, und die beiden zusätzlichen Streben 166 auf. Der Sensor 15 kann also für höhere Kräfte eingesetzt werden. Die Streben 166 dienen außerdem zur Parallelführung der Scherkräfte. Der Sensor 15 kann damit für große Bremsmomente eingesetzt werden, so daß die Bremsvorrichtung gemäß Fig. 6 eine Alternative zu der Bremsvorrichtung gemäß Fig. 3 darstellt.

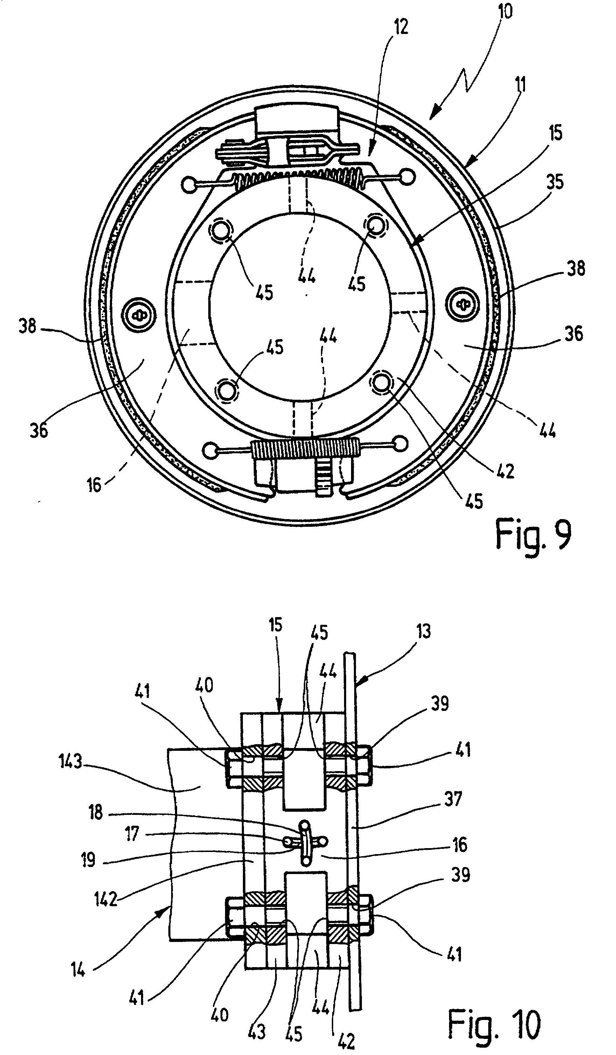

Bei den beiden in Fig. 7 - 10 schematisch skizzierten Bremsvorrichtungen ist jeweils die Radbremse 10 als Trommelbremse ausgebildet. Der Bremskörper 11 ist insoweit als Bremstrommel 35 ausgebildet, der Bremsaktuator 12 weist zwei Bremsbacken 36 auf und der Bremsträger 13 ist als Halteplatte 37 (Fig. 8 und 10) ausgebildet, auf welcher die beiden Bremsbacken 36 schwenkbar so gelagert sind, daß sie sich bei Aktivieren der Trommelbremse mit ihren Bremsbelägen 38 an das Innere der Bremstrommel 35 anpressen. In der Darstellung der Fig. 7 und 9 ist der Übersichtlichkeit halber die Halteplatte 37 entfernt. Zur fahrwerkseitigen Befestigung trägt die Halteplatte 37 vier Durchgangslöcher 39, und fahrwerkseitig ist ein vier entsprechende Durchgangslöcher 40 tragender Befestigungsflansch 142 vorgesehen, der fest an der Radachse 143 des Fahrwerks 14 sitzt.

Bei der Bremsvorrichtung gemäß Fig. 7 und 8 ist die Halteplatte 37 über zwei Sensoren 15 festgespannt. Jeder Sensor ist identisch dem zu Fig. 4 dargestellten und beschriebenen Sensor 15 ausgebildet. Halteplattenseitig und befestigungsflanschseitig ist dazu jeweils eine Kopfschraube 41 durch die Durchgangslöcher 39 bzw. die Durchgangslöcher 40 hindurchgesteckt und in den Gewindebohrungen 33 in den beiden Querstegen 163,164 des Metallblocks 16 verschraubt. Die Bremsvorrichtung gemäß Fig. 7 und 8 ist für kleinere Kräfte geeignet. Da die Scherkraftmessung sehr wegarm ist, ergibt sich eine vernachlässigbar kleine Veränderung der Kraftrichtung aufgrund des Bremsmomentes. Bei der Kalibrierung der Bremsvorrichtung wird dieser Effekt berücksichtigt und damit eliminiert.

Die in Fig. 9 und 10 skizzierte Bremsvorrichtung mit Trommelbremse ist dagegen für höhere Kräfte ausgelegt, wobei nur ein Sensor 15, also nicht zwei redundante Sensoren 15 wie in Fig. 7 und 8, verwendet wird. Der zwischen Halteplatte 37 und Befestigungsflansch 142 angeordnete Sensor 15, der in Fig. 10 in Seitenansicht und in Fig. 9 in Draufsicht zu sehen ist, besteht wiederum aus dem Metallblock 16, der auf seiner Ober- und Unterseite von jeweils einer Ringscheibe 42 und 43 abgedeckt ist. Die radiale Breite der Ringscheibe 42 entspricht etwa der Tiefe bzw. Breite des Metallblocks 16. Die beiden Ringscheiben 42,43 sind durch drei um gleiche Umfangswinkel zueinander und zu dem Metallblock 16 versetzte Radialstege 44 miteinander verbunden. Die Länge der Radialstege 44 entspricht der Ringbreite. Metallblock 16, Ringscheiben 42,43 und Radialstege 44 sind miteinander einstückig ausgebildet. Im Metallblock 16 sind wiederum die beiden Wicklungen 18,19 zueinander gekreuzt durch die vier Durchgangslöcher 17 im Metallblock 16 hindurchgeführt. Die beiden Wicklungen 18,19 sind in der Draufsicht des Sensors 15 gemäß Fig. 9 der Übersichtlichkeit halber nicht eingezeichnet. In den beiden Ringscheiben 42,43 sind vier jeweils um 90° Umfangswinkel zueinander versetzt angeordnete Gewindebohrungen 45 eingebracht, in die wiederum die Kopfschrauben 41 eingeschraubt sind. Wie bei der Trommelbremse in Fig. 7 und 8 sind die Kopf schrauben 41 durch entsprechende Durchgangslöcher 39 bzw. 40 in Halteplatte 37 und Befestigungsflansch 142 hindurchgesteckt. Bei erhöhten Sicherheitsanforderungen und zur Erzielung redundanter Meßergebnisse kann der Sensor 15 mit einem weiteren Kraftaufnehmer ausgerüstet werden, beispielsweise dadurch, daß der dem Metallblock 16 diametral gegenüberliegende Radialsteg 44 durch einen weiteren Metallblock 16 mit den beiden sich kreuzenden Wicklungen 18,19 ersetzt wird.

## Patentansprüche

1. Bremsvorrichtung für Fahrzeuge mit einer Radbremse (10) an jedem Fahrzeugrad, die einen mit dem Fahrzeugrad drehfest verbundenen Bremskörper (11), einen zur Bremsung am Bremskörper (11) angreifenden Bremsaktuator (12) sowie einen den Bremsaktuator (12) aufnehmenden, am Fahrwerk (14) befestigten Bremsträger (13) aufweist, und mit einem am Bremsträger (13) angeordneten Sensor (15) zur Erfassung des Radbremsmoments, **dadurch gekennzeichnet, daß** der Sensor (15) ein den magnetoelastischen Effekt nutzender Kraftaufnehmer ist, der einen lamellierten oder massiven Metallblock (16) mit vier parallel zueinander und zu seinen Seitenflächen verlaufenden, den Metallblock (16) durchdringenden Durchgangslöchern (17) und zwei im rechten Winkel zueinander durch die Durchgangslöcher (17) hindurchgeführte Wicklungen (18,19) aufweist, von denen die eine Wicklung als Primärwicklung (18) wechselstromgespeist und an der anderen Wicklung als Sekundärwicklung (19) eine dem Kraftfluß im Metallblock (16) proportionale Meßspannung abnehmbar ist, und daß der Sensor (15) mindestens ein Befestigungselement zwischen Bremsträger (13) und Fahrwerk (14) bildet, indem sein Metallblock (16) an voneinander abgekehrten, parallel zur Primärwicklung (18) verlaufenden Seitenflächen jeweils am Fahrwerk (14) und am Bremsträger (13) festgespannt ist.

2. Vorrichtung nach Anspruch 1, **dadurch gekennzeichnet, daß** der Metallblock (16) auf den voneinander abgekehrten Seitenflächen je einen davon abstehenden Gewindezapfen (27,28) mit Außen- oder Innengewinde aufweist.

3. Vorrichtung nach Anspruch 1, **dadurch gekennzeichnet, daß** der Metallblock (16) im Längsschnitt Doppel-T-förmig ausgebildet ist und einen im Querschnitt viereckigen Mittelsteg (161) und zwei zueinander parallele plattenförmige Querstege (163,164) aufweist, daß in dem Mittelsteg (161) die beiden Wicklungen (18,19) angeordnet sind und daß in jedem Quersteg (163,164) entfernt vom Mittelsteg (161), vorzugsweise nahe jedem freien Ende der Querstege (163,164), Gewindebohrungen (33) mit zum Mittelsteg (161) parallelen Bohrungsachsen zum Aufnehmen von fahrwerk- bzw. bremsträgerseitig festgelegten Gewindeschrauben (34) eingebracht sind.

4. Vorrichtung nach Anspruch 1, **dadurch gekennzeichnet, daß** der Metallblock (16) im Längsschnitt Doppel-π-förmig ausgebildet ist und zwei beabstandete, parallele Mittelstege (161,162) mit viereckigem Querschnitt und zwei zueinander parallele, plattenförmige Querstege (163,164) aufweist, daß in jedem Mittelsteg (161,162) ein Wicklungspaar der rechtwinklig zueinander ausgerichteten beiden Wicklungen (18,19) angeordnet ist und daß in jedem Quersteg (163,164) entfernt von den Mittelstegen (161,162), vorzugsweise nahe jedem freien Ende der Querstege (163,164), Gewindebohrungen (33) mit zu den Mittelstegen (161,162) parallelen Bohrungsachsen zum Aufnehmen von fahrwerk- bzw. bremsträgerseitig festgelegten Gewindeschrauben (34) eingebracht sind.

5. Vorrichtung nach Anspruch 4, **dadurch gekennzeichnet, daß** die Gewindebohrungen (33) in längs den mittelstegfernen Querkanten der plattenförmigen Querstege (163,164) sich erstreckenden, leistenartigen Vorsprüngen (165) aufgenommen sind, die von den Querstegen auf einander zugekehrten Seiten abstehen und sich mit Spaltabstand gegenüberliegen.

6. Vorrichtung nach Anspruch 5, **dadurch gekennzeichnet, daß** die beiden plattenförmigen Querstege (163,164) an ihren mittelstegfernen Querkanten durch äußere Streben (166) miteinander verbunden sind, die sich jeweils über die Vorsprünge (165) und deren Spaltabstand hinweg erstrecken und mit den Querstegen (163,164) und den Vorsprüngen (165) einstückig sind.

7. Vorrichtung nach Anspruch 1, **dadurch gekennzeichnet, daß** der Metallblock (16) auf seiner Ober- und Unterseite von jeweils einer Ringscheibe (42,43) mit einer etwa der Metallblockbreite entsprechenden Ringbreite abgedeckt ist, daß die beiden Ringscheiben (42,43) durch um Umfangswinkel zueinander versetzte Radialstege (44) miteinander verbunden sind, deren Länge der Ringbreite entspricht, daß in den beiden Ringscheiben (42,43) um vorzugsweise gleiche Umfangswinkel zueinander versetzte Gewindebohrungen (33) zum Aufnehmen von fahrwerk- und bremsträgerseitig festgelegten Gewindeschrauben (41) eingebracht sind und daß Metallblock (16), Ringscheiben (42,43) und Radialstege (44) miteinander einstückig ausgebildet sind.

8. Vorrichtung nach Anspruch 2 für eine als Scheibenbremse ausgebildete Radbremse (10), bei welcher der Bremskörper (11) eine Bremsscheibe (20) ist, der Bremsaktuator (12) mindestens einen Bremskolben (21) aufweist und der Bremsträger (13) als Bremssattel (22) ausgebildet ist, der zwei Augen (23,24) zur Befestigung an am Fahrwerk (14) ausgebildeten, gleichartigen Augen (25,26) aufweist, **dadurch gekennzeichnet, daß** die Gewindezapfen (27,28) von zwei Sensoren (15) jeweils in zwei miteinander fluchtenden, bremssattel- und fahrwerksseitigen Augen (23,24 bzw. 25,26) mittels Muttern (29) oder Schrauben festgespannt sind oder daß die Gewindezapfen (27,28) des Sensors (15) in zwei miteinander fluchtenden, bremssattel- und fahrwerksseitigen Augen (23 bzw. 25) mittels Muttern (29) oder Schrauben festgespannt sind und die beiden anderen miteinander fluchtenden bremssattel- und fahrwerksseitigen Augen (24,26) entweder durch einen Befestigungsbolzen (32) miteinander steif oder durch einen Stehbolzen (30) schwimmend miteinander verbunden sind, indem der Stehbolzen (30) in dem einen Auge (26) festgespannt ist und in das vorzugsweise als Langloch ausgebildete andere Auge (24) mit Spiel hineinragt.

9. Vorrichtung nach einem der Ansprüche 3 - 6 für eine als Scheibenbremse ausgebildete Radbremse (10), bei welcher der Bremskörper (11) eine Bremsscheibe (20) ist, der Bremsaktuator (12) mindestens einen Bremskolben (21) aufweist und der Bremsträger (13) als Bremssattel (22) ausgebildet ist, der zwei Augen (23,24) zur Befestigung an am Fahrwerk (14) ausgebildeten gleichartigen Augen (25,26) aufweist, **dadurch gekennzeichnet, daß** durch jedes bremssattel- und fahrwerksseitiges Auge (23-26) eine Kopfschraube (34) hindurchgesteckt und in Gewindebohrungen (33) im Metallblock (16) des Sensors (15) verschraubt ist.

10. Vorrichtung nach einem der Ansprüche 3 - 6 für eine als Trommelbremse ausgebildete Radbremse (10), bei welcher der Bremskörper (11) eine Bremstrommel (35) ist, der Bremsaktuator (12) zwei Bremsbacken (36) aufweist und der Bremsträger (13) als Halteplatte (37) ausgebildet ist, die die beiden Bremsbacken (36) schwenkbar trägt und Durchgangslöcher (39) zur Befestigung an einem fahrwerksseitigen Befestigungsflansch (142) aufweist, **dadurch gekennzeichnet, daß** durch die Durchgangslöcher (39) in der Halteplatte (37) und gleichartigen Durchgangslöchern (40) in dem Befestigungsflansch (142) des Fahrwerks (14) jeweils Kopfschrauben (41) hindurchgesteckt und in Gewindebohrungen (33) in den Metallblöcken (16) von zwei diametral zur Bremstrommelachse angeordneten Sensoren (15) eingeschraubt sind.

11. Vorrichtung nach Anspruch 7 für eine als Trommelbremse ausgebildete Radbremse (10), bei welcher der Bremskörper (11) eine Bremstrommel (35) ist, der Bremsaktuator (12) zwei Bremsbacken (36) aufweist und der Bremsträger (13) als Halteplatte (37) ausgebildet ist, die die beiden Bremsbacken (36) schwenkbar trägt und Durchgangslöcher (39) zur Befestigung an einem fahrwerksseitigen Befestigungsflansch (42) aufweist, **dadurch gekennzeichnet, daß** durch die Durchgangslöcher (39) der Halteplatte (37) und gleichartigen Durchgangsglöchern (40) in dem Befestigungsflansch (42) des Fahrwerks (14) jeweils Kopfschrauben (41) hindurchgesteckt und in den Gewindebohrungen (45) in den Ringscheiben (42,43) des Sensors (15) verschraubt sind.

## Claims

1. Braking device for vehicles, having a wheel brake (10) on each vehicle wheel, which wheel brake has a brake body (11), which is connected in a rotationally fixed manner to the vehicle wheel, a brake actuator (12) which acts on the brake body (11) for braking purposes, and a brake mount (13) which accommodates the brake actuator (12) and is attached to the undercarriage (14), and having a sensor (15), which is arranged on the brake mount (13), for recording the wheel-braking torque, **characterized in that** the sensor (15) is a force pick-up which utilizes the magnetoelastic effect and has a lamellate or solid metal block (16) with four passage holes (17), which run parallel to one another and to its side faces and penetrate through the metal block (16), and two windings (18, 19), which are guided through the passage holes (17) at right angles to one another, of which one winding, as primary winding (18), is fed with alternating current, and a measurement voltage which is proportional to the force flux in the metal block (16) can be tapped from the other winding as secondary winding (19), and **in that** the sensor (15) forms at least one attachment element between brake mount (13) and undercarriage (14), as a result of its metal block (16), on side faces which are remote from one another and run parallel to the primary winding (18), in each case being clamped to the undercarriage (14) and to the brake mount (13).

2. Device according to Claim 1, **characterized in that** the metal block (16), on the side faces which are remote from one another, has in each case one externally or internally threaded pin (27, 28) projecting therefrom.

3. Device according to Claim 1, **characterized in that** the metal block (16), in longitudinal section, is in the shape of a double T, and has a centre web (161), which is quadrilateral in cross section, and two plate-like transverse webs (163, 164), which are parallel to one another, **in that** the two windings (18, 19) are arranged in the centre web (161), and **in that** threaded bores (33) with bore axes which are parallel to the centre web (161) are formed in each transverse web (163, 164), at a distance from the centre web (161), preferably in the vicinity of each free end of the transverse webs (163, 164), for the purpose of accommodating screws (34) which are fixed on the side of the undercarriage or brake mount.

4. Device according to Claim 1, **characterized in that** the metal block (16), in longitudinal section, is designed in the shape of a double π, and has two centre webs (161, 162), which are at a distance from and parallel to one another and are quadrilateral in cross section, and two plate-like transverse webs (163, 164), which are parallel to one another, **in that** a winding pair comprising the two windings (18, 19) which are oriented at right angles to one another is arranged in each centre web (161, 162), and **in that** threaded bores (33) with bore axes which are parallel to the centre webs (161, 162) are formed in each transverse web (163, 164), at a distance from the centre webs (161, 162), preferably in the vicinity of each free end of the transverse webs (163, 164), for the purpose of accommodating screws (34) which are fixed on the side of the undercarriage or brake mount.

5. Device according to Claim 4, **characterized in that** the threaded bores (33) are formed in strip-like projections (165) which extend along those transverse edges of the plate-like transverse webs (163, 164) which are remote from the centre web(s), protrude from the transverse webs on sides which face one another and lie opposite one another with a gap between them.

6. Device according to Claim 5, **characterized in that** the two plate-like transverse webs (163, 164) are connected to one another by outer struts (166) on their transverse edges which are remote from the centre web(s), which struts each extend beyond the projections (165) and the gap between them and are integral with the transverse webs (163, 164) and the projections (165).

7. Device according to Claim 1, **characterized in that** the metal block (16), on its top and bottom sides, is covered by in each case one ring disc (42, 43) which are of a width which approximately corresponds to the width of the metal block, **in that** the two ring discs (42, 43) are connected to one another by radial webs (44) which are offset with respect to one another by circumferential angles and the length of which corresponds to the width of the rings, **in that** threaded bores (33), which are offset with respect to one another by preferably identical circumferential angles, are formed in the two ring discs (42, 43) for accommodating screws (41) which are fixed on the side of the undercarriage and the brake mount, and **in that** metal block (16), ring discs (42, 43) and radial webs (44) are formed integrally with one another.

8. Device according to Claim 2 for a wheel brake (10) which is designed as a disc brake, in which the brake body (11) is a brake disc (20), the brake actuator (12) has at least one brake piston (21), and the brake mount (13) is designed as a brake calliper (22) which has two eyelets (23, 24) for attachment to eyelets (25, 26) of the same type which are formed on the undercarriage (14), **characterized in that** the threaded pins (27, 28) of two sensors (15) are in each case clamped securely in two aligned eyelets (23, 24 and 25, 26) on the brake calliper and on the undercarriage by means of nuts (29) or screws, or **in that** the threaded pins (27, 28) of the sensor (15) are clamped securely in two eyelets (23 and 25) which are aligned with one another and are on the brake calliper and the undercarriage by means of nuts (29) or screws, and the other two eyelets (24, 26) which are aligned with one another and are on the brake calliper and the undercarriage are either rigidly connected to one another by an attachment bolt (32) or are connected to one another in a floating manner by a stud bolt (30), as a result of the stud bolt (30) being clamped securely in one eyelet (26) and projecting with play into the other eyelet (24), which is preferably designed as a slot.

9. Device according to one of Claims 3-6 for a wheel brake (10) which is designed as a disc brake, in which the brake body (11) is a brake disc (20), the brake actuator (12) has at least one brake piston (21), and the brake mount (13) is designed as a brake calliper (22), which has two eyelets (23, 24) for attachment to eyelets (25, 26) of the same type which are formed on the undercarriage (14), **characterized in that** a cap screw (34) is fitted through each eyelet (23-26) on the brake calliper and on the vehicle and is screwed into threaded bores (33) in the metal block (16) of the sensor (15).

10. Device according to one of Claims 3-6 for a wheel brake (10) which is designed as a drum brake, in which the brake body (11) is a brake drum (35), the brake actuator (12) has two brake shoes (36) and the brake mount (13) is designed as a holding plate (37), which pivotably bears the two brake shoes (36) and has passage holes (39) for attachment to an attachment flange (142) on the undercarriage, **characterized in that** cap screws (41) are fitted through each of the passage holes (39) in the holding plate (37) and passage holes (40) of a similar type in the attachment flange (142) of the undercarriage (14), and are screwed into threaded bores (33) in the metal blocks (16) of two sensors (15) which are arranged diametrally with respect to the brake drum axis.

11. Device according to Claim 7 for a wheel brake (10) which is designed as a drum brake, in which the brake body (11) is a brake drum (35), the brake actuator (12) has two brake shoes (36), and the brake mount (13) is designed as a holding plate (37), which pivotably bears the two brake shoes (36) and has passage holes (39) for attachment to an attachment flange (42) on the undercarriage, **characterized in that** cap screws (41) are fitted through each of the passage holes (39) in the holding plate (37) and passage holes (40) of a similar type in the attachment flange (42) of the undercarriage (14), and are screwed into the threaded bores (45) in the ring discs (42, 43) of the sensor (15).

## Revendications

1. Dispositif de freinage pour véhicules automobiles, comportant sur chaque roue, un frein (10) comprenant un corps de frein (11) solidaire en rotation de la roue, un actionneur de frein (12) venant en prise avec le corps de frein (11) pour produire le freinage, un support de frein portant l'actionneur (12) et fixé au train roulant (14) du véhicule, et un détecteur (15) monté sur le support (12) pour détecter le couple de freinage,
**caractérisé en ce que**
- le détecteur (15) est un transducteur de forces utilisant l'effet magnétoélastique, qui comprend un bloc métallique (16) lamellé ou massif percé de quatre trous de passage (17) traversants parallèles entre eux et aux faces latérales du bloc,
- dans les trous (17) sont montés, se croisant à angle droit, des enroulements (18, 19) dont l'un, en tant qu'enroulement primaire (18) est alimenté en courant alternatif tandis que sur l'autre enroulement, en tant qu'enroulement secondaire (19) on peut relever une tension de mesure proportionnelle au flux de force dans le bloc métallique (16),
- le détecteur (15) constitué au moins d'un élément de fixation entre le support de frein (13) et le train roulant (14) quand son bloc métallique (16) est fixé par serrage sur des portées latérales se tournant le dos, parallèles à l'enroulement primaire (18) et situées sur le train roulant (14) et sur le support de frein (13) respectivement.

2. Dispositif selon la revendication 1,
**caractérisé en ce que**
le bloc métallique (16), sur chacune de ses faces latérales se tournant le dos, porte en saillie un tourillon fileté (27 ou 28)équipé d'un filetage externe ou interne.

3. Dispositif selon la revendication 1,
**caractérisé en ce que**
- le bloc métallique (16) a en coupe longitudinale la forme d'un double T et comporte une barrette centrale rectangulaire (161) et deux barrettes transversales parallèles (163, 164) en forme de plaques,
- les deux enroulements (18, 19) sont montés dans la barrette centrale (161),
- dans chaque barrette transversale (163, 164), loin de la barrette centrale (161) et de préférence près de chaque extrémité libre des barrettes transversales (163, 164) sont percés des alésages filetés (33) dont les axes sont parallèles à la barrette centrale (161) et qui peuvent accueillir des broches filetées (34) fixées du côté du train roulant et du côté du support de frein.

4. Dispositif selon la revendication 1,
**caractérisé en ce que**
- le bloc métallique (16)a en coupe longitudinale la forme d'un double^{TT} et comporte deux barrettes centrales (161, 162)de section rectangulaire, parallèles et espacées, ainsi que deux barrettes transversales (163, 164) en forme de plaques parallèles entre elles,
- dans chaque barrette centrale (161, 162) est montée une paire d'enroulements constituée de deux enroulements (18, 19) croisés à angle droit,
- dans chaque barrette transversale (163, 164), loin des barrettes centrales (161, 162) et de préférence près de chaque extrémité libre des barrettes transversales (163, 164) sont percés des alésages filetés (33) dont les axes sont parallèles à la barrette centrale (161) et qui peuvent accueillir des broches filetées (34) fixées du côté du train roulant et du côté du support de frein.

5. Dispositif selon la revendication 4,
**caractérisé en ce que**
les alésages filetés (33)sont logés dans des saillies (165) en forme de baguettes situées le long des bords transversaux des barrettes transversales (163, 164) en forme de plaques, éloignés des barrettes centrales, ces saillies se faisant face sur des côtés en regard et étant séparés par une fente d'espacement.

6. Dispositif selon la revendication 5,
**caractérisé en ce que**
les deux barrettes transversales (163, 164) en forme de plaques sont, le long de leurs bords transversaux éloignés des barrettes centrales, reliées par des barrettes externes (166) s'étendant au-dessus des saillies (165) et de leurs fentes d'espacement et formant une seule pièce avec lés barrettes transversales (163, 164) et les saillies (165).

7. Dispositif selon la revendication 1,
**caractérisé en ce que**
- le bloc métallique (16), sur son côté supérieur et sur son côté inférieur est recouvert par des disques annulaires (42 et 43) respectivement, d'une largeur correspondant sensiblement à celle du bloc métallique,
- les deux disques annulaires (42, 43) sont reliés par des barrettes radiales (44) décalées angulairement entre elles et dont la longueur correspond à la largeur annulaire,
- dans les deux disques annulaires (42, 43) sont percés, avec de préférence un même décalage périphérique entre eux, des alésages filetés (33) pour accueillir des vis (41) fixées du côté du train roulant et du côté du support de frein,
- le bloc métallique (16), les disques annulaires (42, 43) et les barrettes radiales (44) constituent une seule pièce.

8. Dispositif selon la revendication 2, pour un frein de roue constitué par un frein à disque dans lequel le corps de frein (11) est un disque de frein, l'actionneur de freinage (12) comprend au moins un piston de frein (21) et le support de frein (13) est un étrier de frein (22) percé de deux trous (23, 24) pour fixation sur deux trous analogues (25, 26) portés par le train roulant (14),
**caractérisé en ce que**
les tourillons filetés (27, 28) des deux détecteurs (15) sont fixés par serrage au moyen d'écrous (29) ou de vis dans deux trous alignés correspondants de l'étrier et du train roulant (23, 24 et 25, 26) respectivement ou ces tourillons filetés (27, 28) sont fixés chacun par serrage au moyen d'écrous (29) ou de vis dans deux trous alignés de l'étrier et du train roulant (23 et 25), tandis que les deux autres trous alignés (24, 26) de l'étrier et du train roulant sont reliés soit rigidement par une vis de fixation (32) soit de manière flottante par un goujon fileté (30) fixé par serrage dans un trou (26) et pénétrant avec jeu dans l'autre trou (24) constitué de préférence par une boutonnière.

9. Dispositif selon Tune quelconque des revendications 3 à 6, pour un frein de roue constitué par un frein à disque dans lequel le corps de frein (11) est un disque de frein, l'actionneur de freinage (12) comprend au moins un piston de frein (21) et le support de frein(13) est un étrier de frein (22) percé de deux trous (23, 24) pour fixation sur deux trous analogues (25, 26) portés par le train roulant (14),
**caractérisé en ce qu'**
à travers chaque paire de trous (23 et 26) situés respectivement dans l'étrier de frein et dans le train roulant, passe une vis à tête (34) vissée dans un alésage fileté (33) du bloc métallique (16) du détecteur (15).

10. Dispositif selon Tune quelconque des revendications 3 à 6, pour un frein à tambour dans lequel le corps de frein (11) est un tambour de frein (35), l'actionneur de freinage (12) comprend deux mâchoires de frein (36) et le support de frein(13) comprend deux mâchoires de frein (26) et le support de frein (13) est une plaque de maintien (37) sur laquelle sont montées basculantes les deux mâchoires (36) et qui est percée de trous de passage (39) pour la fixer sur une bride de fixation (42) portée par le train roulant,
**caractérisé en ce qu'**
à travers les trous (39) de la plaque de maintien et les trous analogues (40) de la bride de fixation (142) du train roulant (14) passent des vis à tête (41) qui sont vissées dans des alésages filetés (45) prévus dans les blocs métalliques (16) de deux détecteurs (15) disposés de manière diamétralement opposée par rapport à l'axe du tambour de frein.

11. Dispositif selon la revendication 7,
pour un frein à tambour dans lequel le corps de frein (11) est un tambour de frein (35), l'actionneur de freinage (12) comprend deux mâchoires de frein (36) et le support de frein(13) comprend deux mâchoires de frein (26) et le support de frein (13) est une plaque de maintien (37) sur laquelle sont montées basculantes les deux mâchoires (36) et qui est percée de trous de passage (39) pour la fixer sur une bride de fixation (42) portée par le train roulant,
**caractérisé en ce qu'**
à travers les trous (39) de la plaque de maintien et les trous analogues (40) de la bride de fixation (142) du train roulant (14) passent des vis à tête (41) qui sont vissées dans des alésages filetés (45) prévus dans les disques annulaires (42, 43) du détecteur (15).
